# FASCICULE DE BREVET EUROPEEN

(11) **EP 1 151 438 B1**
(45) Date de publication et mention de la délivrance du brevet: **23.11.2005**
(21) Numéro de dépôt: 99902464.9
(22) Date de dépôt: 26.01.1999
(51) Int. Cl.: G21C 3/62

(54) **PROCEDE DE RECYCLAGE A SEC DE REBUTS DE COMBUSTIBLE NUCLEAIRE D'OXYDE MIXTE D'(U, PU)O2**
VERFAHREN ZUR TROCKENRÜCKFÜHRUNG VON KERNBRENNSTOFF AUF BASIS VON (U, PU)O2 MISCHOXID
METHOD FOR DRY PROCESS RECYCLING OF MIXED (U, PU)O2 OXIDE NUCLEAR FUEL WASTE

(43) Date de publication de la demande: 07.11.2001
(73) Titulaire: Belgonucleaire SA, 1200 Bruxelles (BE)
(72) Inventeur: VANDERGHEYNST, Alain, B-7370 Dour (BE); VAN VLIET, Jean, B-1850 Grimbergen (BE); PELCKMANS, Edouard, B-2460 Kasterlee (BE)
(74) Mandataire: Claeys, Pierre
(86) Numéro de dépôt international: PCT/BE1999/000012
(87) Numéro de publication internationale: WO 2000/045394

(56) Documents cités:
- FR-A- 2 622 343
- FR-A- 2 720 540
- FR-A- 2 765 383
- GB-A- 1 397 014

## Description

La présente invention concerne un procédé de recyclage à sec de rebuts de combustible nucléaire d'oxyde mixte d'(U, Pu)O₂.

La fabrication de combustible pour réacteurs à eau légère, à base d'oxydes d'uranium et de plutonium, généralement appelés combustible MOX, a fait l'objet de divers développements liés à la volonté de recycler du plutonium récupéré lors du retraitement des combustibles usés.

La fabrication et l'irradiation de combustible MOX dans les réacteurs à eau légère sont maintenant considérées comme une solution pour éviter la prolifération du plutonium existant sous forme séparée des produits de fission, que celui-ci soit d'origine civile ou militaire.

Plusieurs procédés de fabrication de combustible MOX ont été développés au cours des deux dernières décennies, certains faisant appel à un broyage complet des poudres d'UO₂ et de PuO₂ pour assurer un mélange intime, d'autres se limitant au broyage d'une fraction seulement de ces poudres.

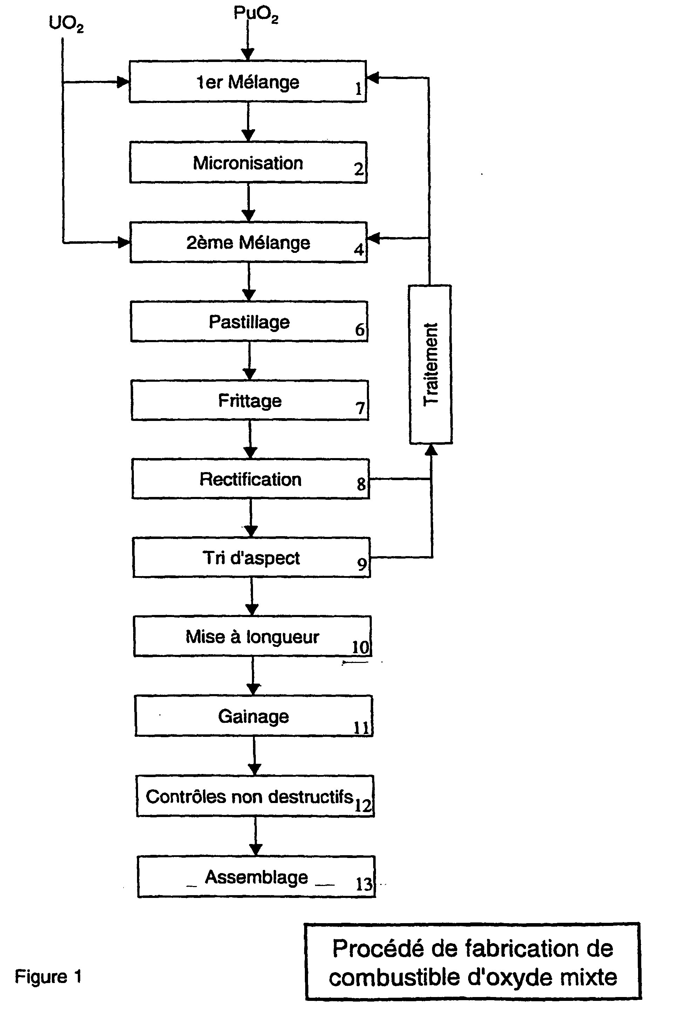

Le procédé MIMAS (acronyme pour Micronisation and MASter blend = micronisation et mélange mère) qui a été développé par la déposante de la présente invention (voir figure 1) procède à la micronisation par broyage d'une seule fraction du mélange final et utilise deux mélanges successifs pour permettre une homogénéisation isotopique et pour tirer parti de l'usage de produits d'entrée UO₂ coulables. La mise en oeuvre d'UO₂ coulable dans le second mélange et la limitation du broyage au seul premier mélange simplifient la fabrication (par exemple en évitant des opérations de compactage préalable/granulation ou de sphéroïdisation du mélange d'oxyde mixte) et ont grandement simplifié, au début de son industrialisation, la qualification du combustible MOX par les utilisateurs et l'obtention des autorisations auprès des Autorités de Sûreté Nucléaire (grâce à la similitude de comportement de ce combustible MOX et du combustible UO₂).

Lors de la fabrication de combustible à oxyde mixte pour des réacteurs à eau légère, des quantités importantes de rebuts sont produites lors des mises au point du procédé de fabrication et continuent d'être produites au cours de la fabrication en routine; ces quantités de rebuts sont liées au procédé lui-même, aux spécifications de l'utilisateur du combustible, à la traçabilité des produits (production par lots) et à la surveillance de leur qualité par échantillonnage.

On connaît des procédés de traitement de rebuts d'oxyde mixte par voie humide. Ces procédés présentent divers inconvénients importants : d'une part, ils génèrent des effluents liquides importants et des risques de criticité supplémentaires; d'autre part, ils nécessitent des conditionnements et transports supplémentaires, dans le cas fréquent où l'installation de traitement par voie humide n'est pas située sur le même site que celui de la production des rebuts.

Il y a donc un besoin de pouvoir recycler directement à sec des rebuts de fabrication de ce genre, à l'endroit de leur production, dans le combustible fabriqué.

De plus, l'expérience a montré que le recyclage de rebuts à sec sans précautions particulières peut conduire à des défauts de produit lors de la fabrication des pastilles : variabilité excessive des caractéristiques physiques du produit, défauts de retrait différentiel (par exemple, liés au recyclage direct des poudres de rectification), défauts de type soufflure causés par des impuretés volatiles, etc.. D'une manière générale, la production d'un produit à spécifications contrôlées passe par le contrôle des caractéristiques des produits d'entrée.

Afin de résoudre les inconvénients énoncés ci-dessus, le procédé de recyclage de l'invention comprend :
- un procédé de fabrication de pastilles de combustible d'oxyde mixte d'(U, Pu)O_{2,} comportant :
   * un dosage et un premier mélange de rebuts en poudre et, le cas échéant, de poudres de PuO₂ et/ou d'UO₂,
   * une micronisation et un tamisage forcé de ce premier mélange,
   * un nouveau dosage et un second mélange du premier mélange tamisé, de poudres d'UO₂ et, le cas échéant, de rebuts en poudre,
   * un pastillage du second mélange, et
   * un frittage des pastilles ainsi formées, et
- un procédé de traitement préalable de rebuts, comportant :
   * un pastillage et un frittage de rebuts poudreux pour former des pastilles de rebut, et
   * une micronisation des pastilles de rebut pour former de la poudre de rebuts destinée à être incorporée, en tant que rebuts en poudre, dans les premier et/ou second mélanges.

On obtient ainsi un procédé de recyclage à sec, qui peut être intégral, des rebuts de fabrication dans le combustible MOX. Ce procédé peut aussi être utilisé pour recycler du combustible d'oxyde mixte d'(U, Pu)O₂ mis au rebut par manque ou abandon d'utilisation.

Suivant un mode de réalisation de l'invention, on prend comme rebuts poudreux, pour le pastillage et le frittage susdits du traitement préalable, des poudres non frittées mises au rebut (par exemple les poudres en fin de lot au pastillage) et/ou des poudres provenant d'une rectification de pastilles de combustible.

Suivant un mode de réalisation avantageux de l'invention on incorpore jusqu'à 40 % en masse de rebuts, par rapport à la production nette de pastilles, dans le procédé précité de fabrication des pastilles de combustible.

D'autres détails et particularités de l'invention ressortiront des revendications ci-jointes et de la description du procédé de l'invention, donnée ci-après à titre d'exemple non limitatif, en faisant référence aux dessins annexés.
La figure 1 montre schématiquement les étapes de la fabrication de combustible d'oxyde mixte, suivant le procédé MIMAS.
La figure 2 montre schématiquement les étapes d'une fabrication de combustible d'oxyde mixte et celles du recyclage à sec, suivant l'invention.

Dans les différentes figures, les mêmes références désignent des éléments semblables ou analogues.

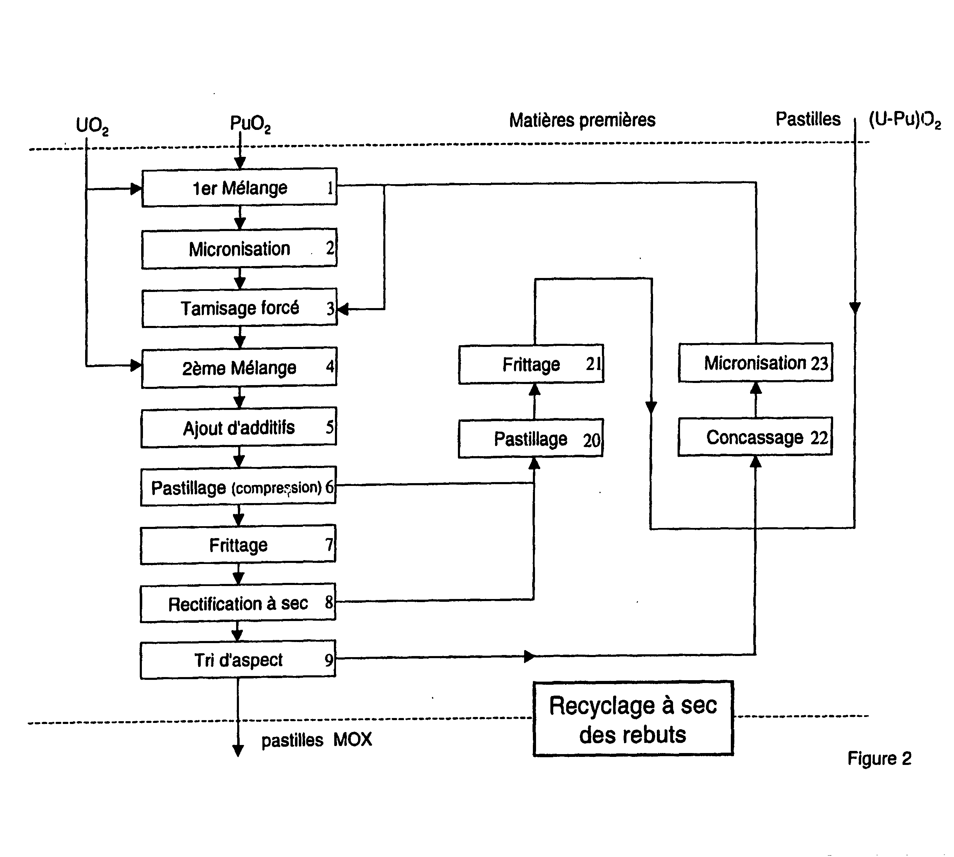

Afin d'éviter les inconvénients susdits, le procédé de l'invention pour le recyclage à sec de rebuts d'oxyde mixte d'(U, Pu)O₂, comprend à la base un procédé de fabrication de pastilles de combustible d'oxyde mixte d'(U, Pu)O₂, c'est-à-dire dans l'ensemble (figures 1 et 2) :
- un dosage et un premier mélange (étape 1) de rebuts en poudre et, le cas échéant, de poudres de PuO₂ et/ou d'UO₂,
- une micronisation (étape 2) de ce premier mélange, en particulier par broyage, et un tamisage forcé (étape 3) de son produit, par exemple à travers une maille de 250µm,
- un nouveau dosage et un second mélange (étape 4) du premier mélange tamisé, de poudres d'UO₂ et, le cas échéant, de rebuts en poudre,
- une homogénéisation (étape 5) du second mélange et une addition d'agent(s) de lubrification et/ou de contrôle de la porosité,
- une compression (étape 6) du second mélange en des pastilles à l'aide de presses (pastillage) et
- un frittage (étape 7) des pastilles ainsi formées, de préférence sous atmosphère d'argon et d'hydrogène humidifiés.

Ce procédé de fabrication de pastilles de combustible d'oxyde mixte peut encore comprendre usuellement, pour les pastilles ainsi obtenues, des étapes de
- rectification à sec (étape 8),
- tri d'aspect (étape 9),
- mise à longueur (étape 10),
- mise sous gaine des pastilles et soudage de celle-ci sous la forme de crayons de combustible (étape 11),
- pressurisation des crayons,
- contrôles non destructifs des crayons (étape 12), et
- assemblage des crayons (étape 13).

Suivant l'invention, ledit procédé de recyclage comprend de plus un procédé de traitement préalable de rebuts, comportant notamment des étapes
- de pastillage (étape 20) et de frittage (étape 21) de rebuts poudreux, provenant en particulier du procédé de fabrication précité de pastilles de combustible d'oxyde mixte, pour former des pastilles de rebut, et
- de micronisation (étape 23) des pastilles de rebut pour former de la poudre de rebuts destinée à être incorporée, en tant que rebuts en poudre, dans les premier et/ou second mélanges (aux étapes 1 et/ou 4).

On notera que le procédé de recyclage décrit ci-dessus ne comporte pas d'étape(s) de compression préalable/granulation (ou de sphéroïdisation) destinée usuellement à améliorer la coulabilité du mélange final et à favoriser le remplissage des matrices lors de la compression. De telles étapes sont en effet superflues dans le cas de l'invention, en raison du choix des étapes du procédé de l'invention et de leur succession pour les produits qui y sont soumis.

Quelques paramètres, qui ne sont pas limitatifs, du procédé de fabrication de pastilles ci-dessus sont donnés ci-après à titre d'exemple :
- travail par lots et par campagne plutôt qu'en continu,
- teneur en plutonium du premier mélange : 20 à 40%,
- broyage par quantité de 60 kg pendant une durée minimale effective de 5 heures,
- utilisation de poudres d'UO₂ en provenance d'ADU ou d'AUC (connus de l'homme du métier),
- addition de 0,2 à 0,5 % de stéarate de zinc et de 0 à 1% d'agent porogène AZB (connu de l'homme du métier),
- compression à une pression entre 400 et 600 MPa,
- frittage de 4 heures minimum à 1650-1760°C sous une ambiance d'argon avec 5 % d'hydrogène et un rapport H₂/H₂O de 20 à 30,
- rectification sans centre (centerless) à sec.

Lors de ces opérations de fabrication, des rebuts peuvent être produits, en cours de fabrication proprement dite, à hauteur de 10 à 20 % de la production nette, cette fourchette étant fonction de quelques variables importantes telles qu'une spécification particulière de l'utilisateur du procédé ou de son client (spécification de défauts visuels, par exemple), l'ampleur des campagnes de fabrication, etc., ...

Pour réduire le temps pris par la micronisation des pastilles de rebut, le procédé peut comprendre de plus un concassage préalable (étape 22) de celles-ci.

Comme rebuts poudreux, pour le pastillage et le frittage susdits (étapes 20 et 21) du procédé de traitement préalable, on peut utiliser, de manière non limitative, des poudres non frittées mises au rebut et/ou des poudres provenant d'une rectification (étape 8) de pastilles de combustible.

En vue de limiter l'investissement en matériel et en place, on peut utiliser les équipements usuels de fabrication de pastilles de combustible susdites, à savoir les broyeurs, presses de compression, fours de frittage, etc., pour les étapes de préparation à sec des rebuts, (étapes 20 à 23), en vue du recyclage. Les paramètres de réglage pour le recyclage pourront être identiques ou différents de ceux de la fabrication proprement dite de pastilles de combustible. Le fait de procéder par lots et campagnes permet d'intercaler les opérations de recyclage entre des opérations de fabrication proprement dite de pastilles.

En ce qui concerne des poussières de rebuts et d'oxydes PuO₂ et UO₂ produites lors des opérations de procédé ou de transfert, on peut les récupérer au moyen de filtres décolmatables afin de les recycler aux étapes de pastillage et de frittage (étapes 20 et 21) en pastilles de rebut.

Avantageusement, on peut incorporer jusqu'à 40 % de rebuts traités au préalable (aux étapes 20 à 23), par rapport à la production nette de pastilles de combustible, dans le procédé précité de fabrication de celles-ci.

L'expérience a montré à la déposante qu'il est possible de recycler, à l'équilibre de la fabrication proprement dite, des rebuts, produits lors de celle-ci, jusqu'à un pourcentage de 20 à 25 % de la production nette de ces pastilles.

En particulier, on recycle à sec une proportion de 99,5 %, exprimée en masse de PuO₂, des rebuts du procédé précité de fabrication proprement dite de pastilles de combustible.

La capacité du procédé de l'invention de recycler des proportions importantes de rebuts peut donc être mise à profit pour recycler des proportions de rebuts inhabituelles rencontrées entre autres lors de tests de qualification du procédé, lors d'incidents de production, etc.

On peut incorporer dans ledit premier mélange jusqu'à 100 % de rebuts traités préalablement suivant l'invention, que ceux-ci proviennent du procédé de fabrication de pastilles MOX de référence (procédé MIMAS) ou d'un autre procédé.

De préférence, on utilise un broyeur à boulets pour la micronisation du premier mélange (étape 2) susdit et/ou desdites pastilles de rebut (étape 23).

Au cours du frittage (étape 7, 21), on peut ajuster la pression partielle d'oxygène p_{O2,} de préférence par une humidification, pour améliorer l'interdiffusion des oxydes PuO₂ et UO₂.

Les principaux types de rebuts rencontrés dans le métier sont repris ci-après en résumé, à titre d'exemple.

| ***Forme*** | ***Origine*** | ***Caractéristiques avant traitement*** | ***% rebuts (en masse** de PuO*_{*2*}*)* |
|---|---|---|---|
| *Poudres* | Fin de lot à la compression en pastilles | Poudre non frittée à granulométrie et aptitude au frittage non maîtrisées | 99.5% |
| | Poudres de rectification | Poudre frittée à granulométrie et aptitude au frittage non maîtrisées | |
| | Récupération de poussières | Teneur en PuO₂ et en impuretés et granulométrie non maîtrisées | |
| *Pastilles* | Rejet au tri d'aspect | Pastilles frittées | |
| | Echantillons | | |
| | Production en excès | | |
| *Divers* | Analyses chimiques | Solutions nitriques | 0.5% |
| | Maintenance et nettoyage d'équipements de production et/ou de boîtes à gants | Impuretés chimiques volatiles | |
| | | Impuretés chimiques non volatiles | |

Les étapes de concassage (étape 22) (facultative) et de micronisation (étape 23) des pastilles peuvent être mises à profit également pour le recyclage de pastilles rebutées, par exemple au tri (étape 9), et pour augmenter la taille des lots de rebuts de poudre homogènes et caractérisés avant recyclage.

Il doit être entendu que la présente invention n'est en aucune façon limitée aux formes de réalisation décrites ci-dessus et que bien des modifications peuvent y être apportées sans sortir du cadre des revendications.

Pour les solutions nitriques de laboratoire, on peut avoir recours à une précipitation et une calcination avant un recyclage à sec comme pour les rebuts énoncés ci-dessus.

Pour des rebuts présentant exceptionnellement des impuretés chimiques non volatiles en excès, on peut avoir recours par exemple à un traitement chimique préalable en phase aqueuse.

Le procédé de recyclage des rebuts suivant l'invention peut être également mis à profit pour recycler, en tant que matières premières, des pastilles non irradiées de combustible nucléaire d'oxyde mixte d'(U, Pu)O₂ éventuellement produites avec des procédés différents (par exemple, provenant de la mise au rebut de combustibles à oxyde mixte non irradiés et destinés à des réacteurs avancés ou réacteurs de recherche).

## Revendications

1. Procédé de recyclage à sec de rebuts de combustible nucléaire d'oxyde mixte d'(U, Pu)O₂ provenant de la fabrication de combustible ou de la mise au rebut de combustible par suite d'un manque ou d'un abandon d'utilisation, comprenant :
- un procédé de fabrication de pastilles de combustible d'oxyde mixte d'(U, Pu)O₂, comportant :
* un dosage et un premier mélange (1) de rebuts en poudre et, le cas échéant, de poudres de PuO₂ et/ou d'UO₂,
* une micronisation (2) et un tamisage forcé (3) de ce premier mélange,
* un nouveau dosage et un second mélange (4) du premier mélange tamisé, de poudres d'UO₂ et, le cas échéant, de rebuts en poudre,
* un pastillage (6) du second mélange, et
* un frittage (7) des pastilles ainsi formées, et
- un procédé de traitement préalable de rebuts comportant :
* un pastillage (20) et un frittage (21) de rebuts poudreux pour former des pastilles de rebut, et
* une micronisation (23) des pastilles de rebut pour former de la poudre de rebuts destinée à être incorporée, en tant que rebuts en poudre, dans les premier (1) et/ou second (4) mélanges.

2. Procédé suivant la revendication 1, **caractérisé en ce qu'**il comprend de plus un concassage (22) des pastilles de rebut avant leur micronisation.

3. Procédé suivant l'une ou l'autre des revendications 1 et 2, **caractérisé en ce que** l'on prend comme rebuts poudreux, pour le pastillage (20) et le frittage (21) susdits du traitement préalable, des poudres non frittées mises au rebut et/ou des poudres provenant d'une rectification (8) de pastilles de combustible.

4. Procédé suivant l'une quelconque des revendications 1 à 3, **caractérisé en ce que**, en vue de leur recyclage, on soumet au même procédé de traitement préalable que les pastilles de rebuts susdites, des pastilles de combustible nucléaire d'oxyde mixte d'(U, Pu)O₂ non irradiées, éventuellement produites avec des procédés de fabrication différents et mises au rebut.

5. Procédé suivant l'une quelconque des revendications 1 à 3, **caractérisé en ce que** l'on incorpore jusqu'à 40 % de rebuts, par rapport à la production nette, dans le procédé précité de fabrication des pastilles de combustible.

6. Procédé suivant l'une quelconque des revendications 1 à 3, **caractérisé en ce que** l'on incorpore jusqu'à 100 % de rebuts dans ledit premier mélange (1).

7. Procédé suivant l'une quelconque des revendications 1 à 3, **caractérisé en ce que** l'on recycle à sec une proportion de 99,5 %, exprimée en masse de PuO₂, des rebuts du procédé précité de fabrication de pastilles de combustible.

8. Procédé suivant l'une quelconque des revendications 1 à 7, **caractérisé en ce que** l'on utilise un procédé de broyage à boulets pour la micronisation (2, 23) du premier mélange et/ou des pastilles de rebut.

9. Procédé suivant l'une quelconque des revendications 1 à 8, **caractérisé en ce que** l'on ajoute un agent de lubrification avant pastillage (6 et 20), de préférence du stéarate de zinc.

10. Procédé suivant l'une quelconque des revendications 1 à 9, **caractérisé en ce que** l'on effectue le frittage (7, 21) des pastilles de combustible contenant des rebuts et/ou des pastilles de rebut dans une atmosphère d'argon et d'hydrogène, de préférence à une température entre 1670 et 1760°C.

11. Procédé suivant l'une quelconque des revendications 1 à 10, **caractérisé en ce que**, au cours du frittage (7, 21), on ajuste la pression partielle d'oxygène p_{O2,} de préférence par une humidification, pour améliorer l'interdiffusion des oxydes PuO₂ et UO₂.

12. Procédé suivant l'une quelconque des revendications 1 à 11, **caractérisé en ce que** l'on récupère, lors des opérations de procédé ou de transfert, au moyen de filtres décolmatables, des poussières de rebuts et/ou d'oxydes de UO₂ et de PuO₂ afin de les recycler à l'étape de pastillage (20) et de frittage (21) en pastilles de rebut.

## Patentansprüche

1. Verfahren zur trockenen Wiederverwertung von Kernbrennstoffabfällen aus (U, Pu)O₂-Mischoxid, die aus der Herstellung von Brennstoff oder aus dem Verwerfen von Brennstoff infolge eines Ausbleibens oder eines Abbruchs der Verwendung stammen, umfassend:
- ein Verfahren zur Herstellung von Brennstoffpellets aus (U, Pu)O₂-Mischoxid, umfassend
* eine Dosierung und eine erste Mischung (1) aus pulverförmigen Abfällen und gegebenenfalls aus PuO₂- und/oder UO₂-Pulvern,
* eine Mikronisierung (2) und ein forciertes Sieben (3) dieser ersten Mischung,
* eine erneute Dosierung und eine zweite Mischung (4) aus der ersten gesiebten Mischung, aus UO₂-Pulvern und gegebenenfalls aus pulverförmigen Abfällen,
* ein Pelletieren (6) der zweiten Mischung, und
* ein Sintern (7) der auf diese Weise gebildeten Pellets; und
- ein Verfahren zur Vorbehandlung von Abfällen, umfassend:
* ein Pelletieren (20) und ein Sintern (21) von pulvrigen Abfällen, um Abfallpellets zu bilden, und
* eine Mikronisierung (23) der Abfallpellets, um Abfallpulver herzustellen, welches dazu bestimmt ist, als pulverförmige Abfälle in die erste (1) und/oder zweite (4) Mischung eingebracht zu werden.

2. Verfahren nach Anspruch 1, **dadurch gekennzeichnet, dass** es ferner ein Zerkleinern (22) der Abfallpellets vor deren Mikronisierung umfasst.

3. Verfahren nach Anspruch 1 oder 2, **dadurch gekennzeichnet, dass** als pulvrige Abfälle für das oben genannte Pelletieren (20) und Sintern (21) der Vorbehandlung ungesinterte, verworfene Pulver und/oder von einem Schleifen (8) von Brennstoffpellets stammende Pulver eingesetzt werden.

4. Verfahren nach einem der Ansprüche 1 bis 3, **dadurch gekennzeichnet, dass** unbestrahlte Kernbrennstoffpellets aus (U, Pu)O₂-Mischoxid, die eventuell mittels unterschiedlicher Herstellungsverfahren hergestellt und verworfen wurden, im Hinblick auf ihre Wiederverwertung dem gleichen Verfahren zur Vorbehandlung unterworfen werden wie die oben genannten Abfallpellets.

5. Verfahren nach einem der Ansprüche 1 bis 3, **dadurch gekennzeichnet, dass** bis zu 40 % Abfälle, bezogen auf die Nettoproduktion, in das oben genannte Verfahren zur Herstellung von Brennstoffpellets eingebracht werden.

6. Verfahren nach einem der Ansprüche 1 bis 3, **dadurch gekennzeichnet, dass** bis zu 100 % Abfälle in die erste Mischung (1) eingebracht werden.

7. Verfahren nach einem der Ansprüche 1 bis 3, **dadurch gekennzeichnet, dass** ein Anteil von 99,5 %, ausgedrückt als Masse an PuO₂, der Abfälle des oben genannten Verfahrens zur Herstellung von Brennstoffpellets trocken wiederverwertet wird.

8. Verfahren nach einem der Ansprüche 1 bis 7, **dadurch gekennzeichnet, dass** für die Mikronisierung (2, 23) der ersten Mischung und/oder der Abfallpellets ein Kugelmahlverfahren eingesetzt wird.

9. Verfahren nach einem der Ansprüche 1 bis 8, **dadurch gekennzeichnet, dass** vor dem Pelletieren (6 und 20) ein Schmiermittel, vorzugsweise Zinkstearat, zugefügt wird.

10. Verfahren nach einem der Ansprüche 1 bis 9, **dadurch gekennzeichnet, dass** das Sintern (7, 21) der Abfälle enthaltenden Brennstoffpellets und/oder der Abfallpellets in einer Atmosphäre aus Argon und Wasserstoff, vorzugsweise bei einer Temperatur zwischen 1.670 und 1.760 °C, durchgeführt wird.

11. Verfahren nach einem der Ansprüche 1 bis 10, **dadurch gekennzeichnet, dass** im Verlauf des Sinterns (7, 21) der Sauerstoffpartialdruck p_{O2} angepasst wird, vorzugsweise durch eine Befeuchtung, um die Durchmischung der Oxide PuO₂ und UO₂ zu verbessern.

12. Verfahren nach einem der Ansprüche 1 bis 11, **dadurch gekennzeichnet, dass** bei Arbeitsgängen des Verfahrens oder des Transfers Stäube von Abfällen und/oder von Oxiden UO₂ und PuO₂ mittels reinigbarer Filter rückgewonnen werden, um diese in den Schritten des Pelletierens (20) und des Sinterns (21) als Abfallpellets wiederzuverwerten.

## Claims

1. A process for dry recycling of (U,Pu)O₂ mixed-oxide nuclear fuel scrap arising from the manufacture of fuel or from the scrapping of fuel as result of shortage or discontinuation of use, comprising :
- a process for manufacturing (U,PU)O₂ mixed oxide fuel pellets including:
* a dispensing and a first blending (1) of waste in powder form and, if required, of PuO₂ and/or UO₂ powders,
* micronization (2) and forced sieving (3) of this first blend,
* another dispensing and a second blending (4) of the first sieved blend, of UO₂ powders and, if required, of scrap in powder form,
* pelletizing (6) of the second blend, and
* sintering (7) of the resulting pellets, and
- a process for pretreating scraps including:
* pelletizing (20) and sintering (21) of powder scraps in order to form scrap pellets, and
* micronization (23) of the scrap pellets in order to form scrap powder designed to be incorporated as scrap in powder form into the first (1) and/or second (4) blend.

2. The process as claimed in claim 1, **characterised in that** it comprises, in addition, crushing (22) of the scrap pellets before their micronization.

3. The process as claimed in either of claims 1 and 2, **characterised in that** scrapped unsintered powders and/or powders arising from grinding (8) of fuel pellets are taken as powder scrap for the aforementioned pelletizing (20) and sintering (21) of the pretreatment.

4. The process as claimed in any one of claims 1 to 3, **characterised in that** unirradiated (U,Pu)O₂ mixed-oxide nuclear fuel pellets, possibly produced by different manufacturing processes and scrapped, undergo the same pretreatment process as the aforementioned scrap pellets for the purpose of recycling them.

5. The process as claimed in any one of claims 1 to 3, **characterised in that** up to 40% of scrap, with respect to the net production, is incorporated into the aforementioned process for manufacturing fuel pellets.

6. The process as claimed in any one of claims 1 to 3, **characterised in that** up to 100% of scrap is incorporated into said first blend (1).

7. The process as claimed in any one of claims 1 to 3, **characterised in that** a proportion of 99.5%, expressed as mass of PuO₂, of the scraps from the aforementioned process for manufacturing fuel pellets is dry-recycled.

8. The process as claimed in any one of claims 1 to 7, **characterised in that** a ball milling process is used for the micronization (2, 23) of the first blend and/or of the scrap pellets.

9. The process as claimed in any one of claims 1 to 8, **characterised in that** a lubricant is added before pelletizing (6 and 20), preferably zinc stearate.

10. The process as claimed in any one of claims 1 to 9, **characterised in that** the fuel pellets containing scraps and/or the scrap pellets are sintered (7, 21) in an argon and hydrogen atmosphere, preferably at a temperature of between 1670 and 1760°C.

11. The process as claimed in any one of claims 1 to 10, **characterised in that**, during sintering (7, 21), the partial pressure of oxygen p_{O2} is adjusted, preferably by humidification, in order to improve the interdiffusion of the PuO₂ and UO₂ oxides.

12. The process as claimed in any one of claims 1 to 11, **characterised in that** scraps and/or UO₂ and PuO₂ oxide powders are recovered during the process or transfer operations by means of cleanable filters, so as to recycle them into scrap pellets at the pelletizing (20) and sintering (21) step.
